# EUROPEAN PATENT SPECIFICATION

(11) **EP 1 306 952 B1**
(45) Date of publication and mention of the grant of the patent: **26.07.2017**
(21) Application number: 02396155.0
(22) Date of filing: 17.10.2002
(51) Int. Cl.: H02G 3/12

(54) **Electrical duct box**
Elektrokanaldose
Boîtier électrique pour un conduit

(30) Priority: 26.10.2001 FI 20012084
(43) Date of publication of application: 02.05.2003
(73) Proprietor: Lexel Electric Oy, 07970 Ruotsinpyhtää (FI)
(72) Inventor: Seger, Leif, 07900 Loviisa (FI)
(74) Representative: Berggren Oy, Helsinki & Oulu

(56) References cited:
- EP-A- 0 498 405
- DE-U- 9 314 551
- GB-A- 2 352 885

## Description

The invention relates to an electrical duct box according to the preamble of claim 1.

An electrical duct box is to be installed in an electrical duct. The term electrical duct here means various elongate installation spaces which can be mounted on wall and which are at least partly covered by protective plates, usually made of U-shaped basic profile and designed in various shapes. Along these installation spaces, there can be drawn various cables and wires, such as electric and/or data transmission cables, and various electric appliances and the like can be installed in said spaces. As for the term electrical duct box, in this connection it means in general an electric appliance that can be installed in the electrical duct, including for instance power sockets, switches, meters, tele, telephone and data transmission connectors/elements and other similar elements.

In the prior art there is known, from the European patent publication EP-498405, an electrical duct box that can be installed in an electrical duct without a separate shielding box. Said electrical duct box includes a connector element, through which the supply voltage required by the electrical box is fed in the box. The connector element can be connected to the mains by means of an input cable. In addition, an output cable can be connected to the connector element for conducting the electricity further from the electrical duct box. The connector element is either a separate element to be connected to the electrical duct box, or it is a unit formed by the electrical duct box and the connector element. In both cases, the connector element is coupled, in the lengthwise direction, to the end of the electrical duct box.

A drawback in the described prior art electrical duct box is that the input and output cables are brought into the connector element from one and the same direction. Thus the output cable must be arranged to circulate further underneath the electrical duct box, which makes it difficult to realize further connections.

Another drawback in the prior art electrical duct box is that a second electrical duct box can only be coupled to one end of the electrical duct box, i.e. to that end that is opposite to the connector element thereof. Thus the known electrical duct box can only be extended in one direction, which restricts the possibilities for expanding the structure.

The object of the invention is to eliminate the drawbacks of the electrical duct box described above. Another object of the invention is to realize a new electrical duct box.

The electrical duct box according to the invention is characterized by what is specified in claim 1. The dependent claims describe preferred embodiments of the invention.

The electrical duct box according to the invention comprises a front plate provided with a number of power sockets, a wire housing for wire connections inside the electrical duct box, said wire housing being arranged behind the power sockets when seen at the front of the electrical duct box, on the front plate side; and a fixed connector element provided with an electric connector at least for connecting wires of the input cable, a wire space for at least the wires of the input cable and a cover for shielding at least the input cable connections; through which connector element the electrical duct box is meant to be connected by the input cable to the mains or to a corresponding source of electricity. According to the invention, the connector element is arranged, with respect to the front plate, on the opposite side of the electrical duct box and connected thereto.

An advantage of the invention is that the connector element is arranged in a well-shielded place behind the front plate and wire housing of the electrical duct box, in which case it is placed in the electrical duct in a well-protected location. Another advantage of the invention is that the electric connector of the connector element, particularly its contact units, are easy and simple to couple electrically to suitable wire connections of the electrical duct box, for instance to conductor rails or other corresponding conductor elements. Yet another advantage is that the input and output cable are naturally and simply connectable to the connector element.

Another remarkable advantage of the invention is that both ends of the electrical duct box are left free, so that when necessary, there can be connected additional parallel electrical duct boxes, such as the electrical duct boxes introduced in said European patent publication EP-498405. Thus the electrical duct box can be extended in the lengthwise direction at either end, which makes the installation options even more versatile.

Yet another advantage of the invention is that the whole electrical duct box is electrically shielded against touching. It can be installed in the electrical duct without a separate shielding box. A particular advantage of the invention is that the electrical contacts arranged at both ends of the electrical duct box are electrically shielded against touching; a new auxiliary electrical duct box is directly connectable in parallel with the electrical duct box according to the invention, in principle even without interrupting the power supply to the electrical duct box.

In a preferred embodiment of the invention, the electrical contacts, provided in the connector element, preferably a terminal block, is arranged in the lengthwise direction in the electrical duct box. In that case the cable wires are connected to the contact units at an angle of essentially 90° with respect to the lengthwise direction of the electrical duct box, i.e. in the transversal direction thereof. Consequently, the input and output cable wires need to be bent only for 90° when connecting them to the electric connector.

In another preferred embodiment of the invention, the cable fastening elements in the connector element include fastening elements for the input and output cable, and they are arranged in connection with the wire housing so that they are placed in succession in the lengthwise direction of the electrical duct box and spaced apart, so that the cables can be arranged to run through the cable fastening elements in the lengthwise direction of the electrical duct box.

An advantage of the embodiment described above is that both the input cable and the possible output cable always proceed in the direction of the electrical duct, as far as the fastening elements, in which case the cable is not in any way bent and/or folded when realizing the electrical connection. This arrangement improves safety and makes it easier to fasten the cables.

In a third preferred embodiment of the invention, the electrical contacts and cable fastening elements of the connector element are arranged, in the lengthwise direction of the electrical duct box, at opposite sides of the electrical duct box, and in between them, there is arranged a space for wires and cables. This arrangement means that the connector element is realized on a relatively small area, and so that the cable wires bent and connected to the electric connector in good order and within a sufficient space.

In the most preferred embodiment of the invention, the wire housing of the electrical duct box is narrow and elongate and arranged in the lengthwise direction of the electrical duct box. The advantage is that thus there is left space on both sides of the wire housing for the electrical contacts of the connector element, as well as for the cable fastening elements. Thus the height or thickness of the electrical duct box is also maintained reasonable, irrespective of the location of the connector element underneath the electrical duct box.

In a preferred embodiment of the invention, both ends of the electrical duct box in the lengthwise direction are provided with shielded electric connectors, which both are female electric connectors with a similar structure. The advantage of this embodiment is that in the lengthwise direction of the electrical duct box and also of the electrical duct, auxiliary electrical duct boxes can be directly connected on both sides. Yet another advantage is that the electrical duct box can also be used alone in the electrical duct, and still the electric connectors provided at both ends thereof are shielded against touching. This improves the safety of the electric installation process.

In a preferred embodiment of the invention, both ends of the electrical duct box in the lengthwise direction are provided with mechanical fastening elements, particularly snap-in type coupling elements, for mechanically fastening auxiliary electrical duct boxes. The advantage is that thus the auxiliary electrical duct box is connected to the electrical duct box according to the invention in an advantageous fashion both electrically and mechanically simply by manual installation, without any tools.

The preferred embodiment of the invention includes three power sockets. Because the fixed connector element is arranged, with respect to the front plate, on the opposite side of the electrical duct box, the advantage is that three power sockets can be arranged in the electrical duct box without increasing the length thereof with respect to the prior art electrical duct box that is provided with a fixed connector element. Another advantage in this situation is that the need for auxiliary electrical duct boxes is decreased.

The invention is explained in more detail below, with reference to the appended drawings, where
Figure 1 is a schematical perspective illustration of an electrical duct and an electrical duct according to the invention, arranged in said duct, as well as of a second electrical duct box arranged in parallel with the first one;
Figure 2 is a perspective illustration, seen diagonally from above, of an electrical duct box according to the invention,

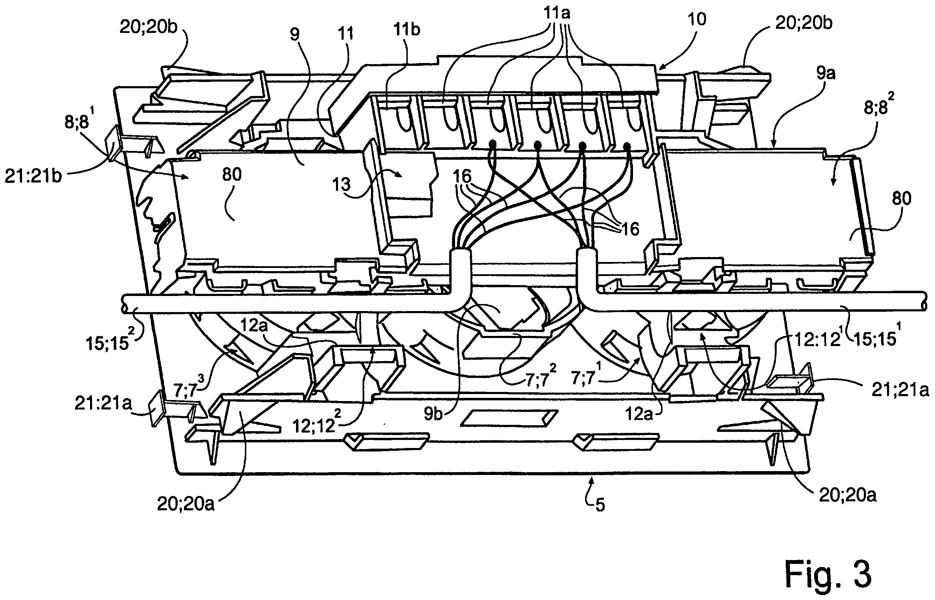

Figure 3 is a perspective illustration, seen diagonally from below, of the electrical duct box of figure 2, shown without the shielding cover,
Figure 4 is a perspective illustration, seen diagonally from below, of the electrical duct box of figure 2, shown with the shielding cover, and
Figure 5 illustrates the electric connector of the electrical duct box according to the invention, and another electric connector of another electrical duct box to be connected thereto.

Like numbers for like parts are used in the drawings.

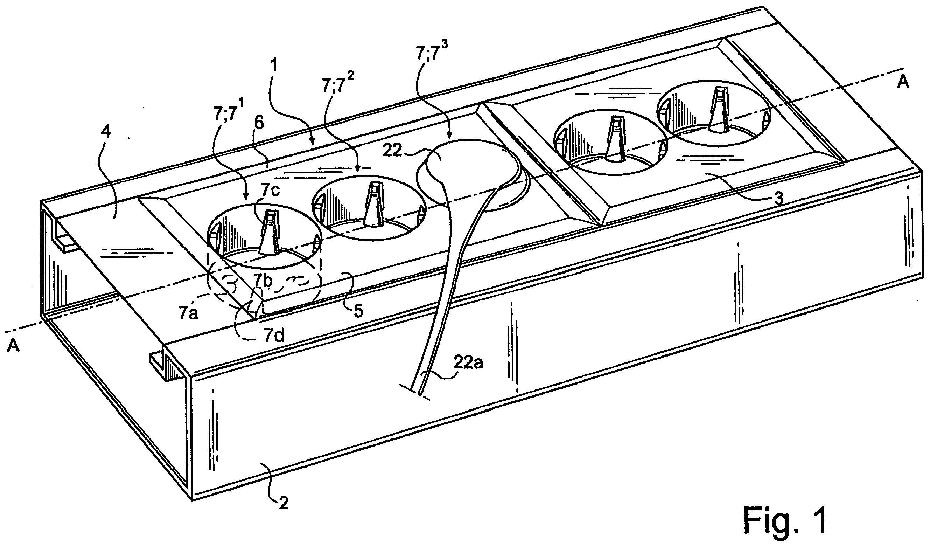

An electrical duct box 1 according to the invention, particularly a duct power socket, is illustrated in figure 1 as arranged in an electrical duct 2. In addition, in parallel to said electrical duct box, in the lengthwise direction thereof, there is arranged a second electrical duct box 3, particularly a second duct power socket.

In cross-section, the electrical duct 2 is a rectangular trough open at the front surface, in which one or several electrical duct boxes 1, 3 can be fastened, preferably by a fast coupling or snap-in joint without tools. In addition, the parallel electrical duct boxes 1, 3 can be interconnected both mechanically and electrically. These connections are also realized by snap-in joints, as is described in more detail below. The electrical duct 2 can be covered by shielding plates 4 outside the electrical duct boxes 1, 3. Preferably also the shielding plate 4 can be connected by a snap-in joint to the front surface of the electrical duct. Electric and other cables, such as telephone and data transmission cables, are arranged to proceed along the electrical duct 2. The power sockets proper, as well as other electric appliance and device connections, even part of such appliances and devices themselves can be arranged in the electrical duct box according to the invention.

The electrical duct box 1 comprises a front plate 5 and a cover frame 6 surrounding the plate. The front plate 5 constitutes the outwardly visible part of the electrical duct box when it is fixed in the electrical duct 2. Other parts of the electrical duct box 1 remain inside the electrical duct. By means of the cover frame 6, the lengthwise connecting seams of the electrical duct box and the electrical duct are covered, and there is made a neat butt seam, at least between successive electrical duct boxes 1, 3. When necessary, the seam or gap between the electrical duct box 1, 3 and the shielding plate can be covered by a separate cover strip.

In the preferred embodiment illustrated in the drawings, the electrical duct box is a duct power socket. In that case the electrical duct box 1 includes a number of power sockets 7; 7¹, 7², 7³ that are arranged in the front plate 5. Advantageously the number of power sockets 7 is three (however, at least one or two in the case of a duct power socket), and they are arranged in succession in the lengthwise direction A - A of the duct power socket, and likewise in the lengthwise direction of the duct 2. Each power socket 7 includes, in a known fashion, two recesses 7a, 7b for the contact pins of the plug to be connected thereto, and in this embodiment also two earth terminals 7c, 7d. The electric contact elements proper of the power socket, i.e. zero and phase/voltage, are arranged in the recesses 7a, 7b. Respectively, the earth terminals 7c, 7d are connected to protective ground. The described arrangement is a single-phase shielded power socket. As an alternative, the power socket connections can be realized as an unearthed version, in which case the earth terminals are not provided.

Preferably the recesses 7a, 7b (and likewise the earth terminals 7c, 7c) of power socket are arranged at an angle of 45 degrees with respect to the lengthwise direction A - A of the electrical duct box 1. This means that the recesses are located on a straight line that is arranged at an angle of 45 degrees with respect to said lengthwise direction A - A. Thus the connecting of such plugs 22 to the electrical duct box, where the cord 22a comes out from the plug sideways at right angles, compared to the contact pins and the straight line proceeding via said contact pins (cf. figure 1), does not cause any problems, even if the adjacent power socket were provided with a similar plug. Naturally the recesses of the power socket can also be arranged in a different position, for instance on a straight line according to the lengthwise direction A - A of the electrical duct box.

In the lengthwise direction A - A of the electrical duct box 1, at both ends 1a, 1b (that open to the electrical duct when installed) there are provided electric connectors 8; 8¹, 8² that are electrically shielded from contact.

The electric connectors 8; 8¹, 8² of the electrical duct box 1, and the electric contact elements of the power sockets 7; 7¹, 7², 7³ are respectively interconnected in a known fashion by internal wire connections in the electrical duct box, for example by suitable conductor elements. Generally said conductor elements are conductor rails or similar electric conducting bodies. The conductor rails are arranged underneath the front plate 5 and the contact elements of power socket 7 and they are shielded by means of a wire housing 9. The conductor rails are arranged essentially in the lengthwise direction A - A of the electrical duct box 1, between the electric connectors 8; 8¹, 8² of the ends 1a, 1b and underneath the power socket connections 7; 7¹, 7², 7³.

In the most advantageous embodiment of the invention, the shape of the wire housing 9 of the electrical duct box 1 is narrow and elongate, so that the underside of the edge areas of the long sides of the front plate 5 of the electrical duct box 1 remains to be available for the use of the fixed connector unit 10, as will be explained further below. In that case the conductor rails are arranged in the middle region of the electrical duct box 1, when observed in the transversal direction thereof, and also immediately below the power sockets 7; 7¹, 7², 7³.

The electrical duct box 1 comprises a fixed connector unit 10. According to the invention it is arranged, with respect to the front plate 5, and in this embodiment also with respect to the power sockets 7, on the opposite side of the electrical duct box, on the side of the wire housing 9, and connected thereto. When the electrical duct box 1 is arranged in the electrical duct 2, the connector unit 10 is located near the bottom part of the electrical duct. Thus it is arranged in a well-protected place.

The connector unit 10 comprises an electric connector 11 for connecting at least the wires 16 of the input cable 15; 15¹; cable fastening elements 12 for at least the input cable 15; 15¹; a wire space 13 for at least the wires 16 of the input cable 15; 15¹; and a shielding cover 14 for protecting at least the connections of the input cable 15; 15¹. Through the connector unit 10, the electrical duct box 1 is to be connected to the mains or to a similar source of electricity.

The electric connector 11 includes a number of contacts 11a, 11b for connecting electric wires to the electrical duct box 1. Advantageously the electric connector 11 is a terminal block provided with a number of connector units 11a arranged adjacently in a straight line. The electric connector 11, especially its contacts 11a, is particularly arranged in the lengthwise direction of the electrical duct box 1. In addition, in the most preferred embodiment of the invention, the electric connector 11 is fitted on the first side 9a of the wire housing 9.

The electric connector 11 of the connector unit 10 includes five contacts 11a, and to each contact there can be connected at least one electric wire 16 of the input and output cable 15. In that case the contacts 11a of the electric connector are meant for the three phases of a mains or a respective source of electricity, i.e. for voltage/phase, zero and protective ground. Thus for example electrical duct boxes arranged in one and the same electrical duct can be suitably grouped in different electric groups in order to suitably load the different phases. Most advantageously the contacts 11a are spring-loaded, in which case the end of the wire 16 is simply inserted in the contact's fastening gap, and it is fixed therein. A contact is opened with a suitable too, such as a screwdriver, by opening the fastening gap wider. As an alternative, the contacts (or at least one or more of them) can also be provided with fastening screws.

In a preferred embodiment, the electric connector 11 of the connector unit 10 also includes a sixth contact 11b, to which the electrically conductive shield cover of the input and/or output cable can be connected. Said unit is advantageously provided with a fastening screw in order to realize an optimal electric connection.

The cable fastening elements 12 of the connector unit 10 include the fastening elements 12; 12¹, 12² of the input and output cables 15; 15¹, 15² The fastening elements 12 are so-called cable clamps, by which the cable ends are attached to the electrical duct box 1 so that they are resistant to moderate traction. They are arranged in succession in the lengthwise direction A - A of the electrical duct box 1, spaced apart at suitable intervals, for instance at 3 - 6 cm from each other. In the described preferred embodiment, they are particularly arranged on the other long side 9b of the wire housing 9. Thus the input and output cable 15; 15¹, 15² is made to proceed in parallel in the lengthwise direction A - A in the electrical duct. Only the connection part of the cable 15, where the electrically insulating protective envelope is removed and the electric wires 16 of the cable are released, is bent and suitably connected to the electric connector 11.

The wire space 13 of the connector unit 10 is located underneath the wire housing 9, i.e. on the opposite side of the electrical duct box 1 with respect to the front plate 5, between the electric connector 11 and the cable fastening elements 12. When observed at the top, the wire space 13 is advantageously a rectangular or a resembling space, at one edge whereof there are arranged the contacts 11a, 11b of the electric connector 11 in a straight line, and at the corners of the other edge, or in the vicinity thereof, in the edge region, there are in turn provided the fastening elements 12; 12¹, 12² of the input and output cable 15; 15¹, 15².

The wire space 13 and electric connector 11 of the connector unit 10 are advantageously arranged so that the fastening holes provided in the contacts 11a, 11b and meant for the wires 16 of the cables 15 are arranged a small distance outwardly from the bottom surface of the wire housing 9 or from the level of said bottom surface, in which case the cable wires can be brought directly from the wire space 13 to the contact gaps. However, the height of the wire space 13 is relatively small, advantageously 2 - 3 times the diameter of the cable wire 16.

With respect to the above described preferred embodiment that is illustrated in the drawings, the wire housing 9 of the electrical duct box 1 can alternatively be wide, extending at least roughly over the whole width of the electrical duct box 1. In that case the electric connector 11 and the cable fastening elements 12 are at least partly embedded in the wire housing 9, and a wire space 13 is arranged therebetween, in principle in the same way as was described above.

The shielding cover 14 of the connector unit 10 can be detachably fastened, for instance by a snap-in joint, to cover the cable fastening elements 12 and the wire space 13, so that it embraces them against the wire housing 9, or more generally against the housing of the electrical duct box. The cable fastening elements 12 are advantageously located at the cable apertures of the shielding cover 14. In general, the housing of the electrical duct box 1 comprises at least the front plate 5 of the electrical duct box and the wire housing 9, as well as other possible support elements for holding the box together. In shape, the shielding cover 14 is advantageously a regular, modified rectangular prism that is open on one side.

Both of the cable fastening elements 12 are most advantageously realized of two parts 12a, 12b. The first part 12a of the cable fastening element 12 is attached to the wire housing 9 or the like, and the second part 12b to the shielding cover 14, at a point corresponding to the first element 12a, at the cable aperture. Both parts 12a, 12b of the cable fastening element are trough-like in shape and designed so that the cable 15 is suitably fitted first in the first part 12a and then between the two parts 12a, 12b to be pressed together. The cables 15 are attached between the parts 12a, 12b by a compression joint at the same time as the shielding cover 14 is fixed in place. Now the wires 16 of the cable 15 are connected to suitable contacts 11a of the electric connector 11.

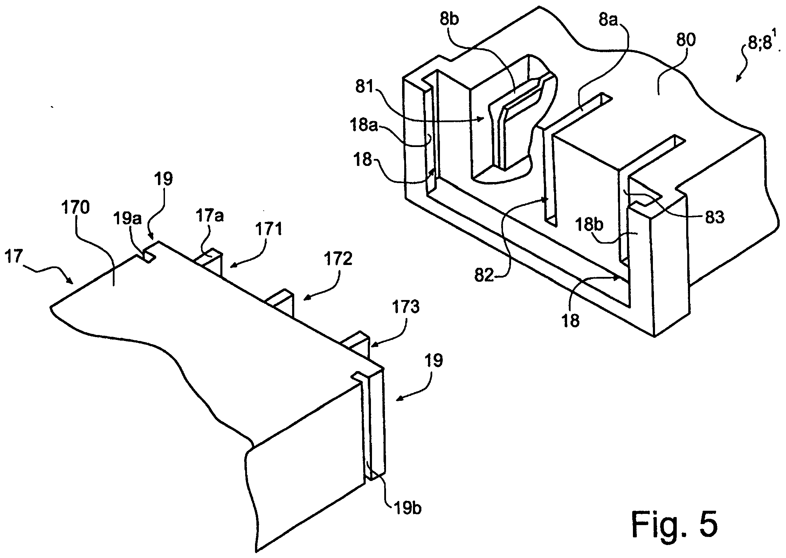

Both ends 1a, 1b of the electrical duct box 1 are provided with shielded electric connectors 8; 8¹, 8², as was already maintained above. In structure, both electric connectors 8 are similar female electric connectors, as is illustrated in figure 5. The electric connectors 8; 8¹, 8² are arranged underneath the level formed by the surface of the front plate 5 of the electrical duct box 1, i.e. on the side of the electrical duct, but so that they extend to outside the ends 1a, 1b in the lengthwise direction A - A of the electrical duct box.

The electric connector 8 of the end 1a, 1b comprises a housing 80 and female contacts 81, 82, 83 suitably arranged therein. When seen from above, at the top of the electrical duct box, the housing 80 complete with the female contacts 81, 82, 83 extends to outside the end edges of the front plate 5. The number of the female contacts 81, 82, 83 is advantageously three: one for phase/voltage 81, one for zero 82 and one for ground 83. Each contacts 81, 82, 83 comprises a contact gap 8a that is electrically insulated and is open in the upward direction, towards the front plate 5, inside which contact gap 8a there is arranged, electrically protected against accidental contact, the conductive, advantageously two-part and preferably spring-loaded contact element 8b.

To the electric connector 8 of the electrical duct box, which connector 8 is here called the first electric connector, there can be connected a device with a second, i.e. a male connector 17. Said second connector 17 comprises a housing 170 provided with male contacts 171, 172, 173 that are suitably arranged therein, which male contacts also are illustrated in figure 5. Respectively, the number of male contacts 171, 172, 173 is advantageously three: one for phase/voltage 171, one for zero 172 and one for ground 173. Each male contacts 171, 172, 173 is made of an electrically conductive contact tongue 17a, extending in the lengthwise direction A - A, which tongue 17a can be inserted from above, from the direction of the front plate 5, to be connected with the respective female contacts 81, 82, 83 of the electric connector 8, advantageously between the two-part female contacts 8b.

Naturally the female and male electric connectors 8, 17 can be realized in many different ways; the one described above is an advantageous way to realize both electric connectors. In general, female electric connectors include, in each connector element, an electrically insulated and thus protected recess provided with the electroconductive contact terminal proper. Respectively, male electric connectors include, in each connector element, a protruding pin-like electroconductive contact terminal that can be inserted in the respective female connector.

Advantageously the female and male connectors 8, 17 are also provided with respective first and second mechanical fasteners 18, 19. By means of said fasteners 18, 19, the electric connectors 8, 17 are detachably connected at their housings 80, 170, so that they are not detached due to the influence of mechanical, lengthwise traction or similar strain.

The mechanical fasteners 18, 19 are advantageously realized as follows. The first set of fasteners 18 includes two projections, such as lips 18a, 18b, arranged in the housing 80 of the first electric connector 8. In this case the lips are positioned at right angles to the lengthwise direction A - A of the electrical duct box, so that they are directed towards each other and upwardly towards the front plate 5 as shown in figure 5. The second set of fasteners 19 includes two recesses, such as grooves 19a, 19b, arranged in the housing 170 of the second electric connector 17. The grooves 19a, 19b are arranged to co-operate with the lips 18a, 18b so that they are positioned at right angles in the lengthwise direction A - A of the electrical duct box, and to open to the opposite directions and upwardly towards the front plate 5.

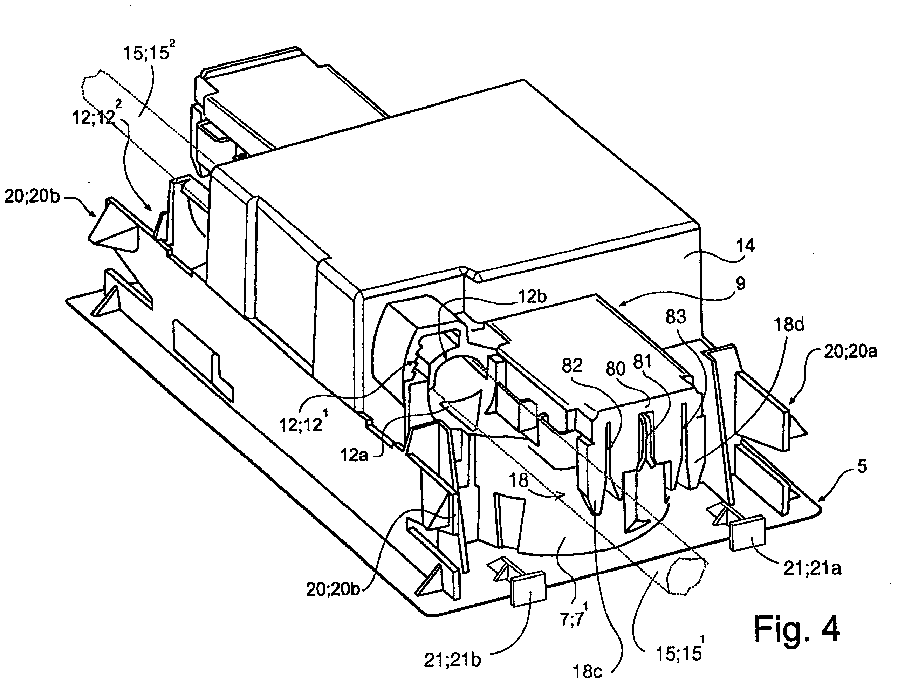

Alternatively the projections and recesses of the mechanical fasteners 18, 19 are realized by means of pins and respective holes. The housing 80 of the first electric connector 8 comprises two pins 18c, 18d, as shown e.g. in figure 4, which pins are arranged on the both sides of the female contacts 81, 82, 83. Respectively, the housing of the second electric connector comprises two holes, which are arranged on the both sides of the male contacts (not shown in the drawings). The pins and holes are positioned at right angles to the lengthwise direction A - A of the electrical duct box, and so that they are directed towards each other. They can be arranged essentially in the same positions as the lips and grooves in the fasteners 18, 19 of figure 5. The pins and holes advantageously have such a shape that the pins decrease conically to the top and, respectively, the holes to the bottom. Thus they serve as a concentrating bodies for mechanical connection and help the female and male contacts to find their way to optimal contact with each other when coupling the first and second electric connector.

The fasteners 18, 19 are arranged in connection with the electric connectors 8, 17, so that when the electric connectors are pressed together, the projections, such as lips 18a, 18b, and recesses, such as grooves 19a, 19b of the mechanical fasteners 18, 19 are also joined together.

In the lengthwise direction A - A of the electrical duct box 1, most advantageously at both ends 1a, 1b thereof, there are provided mechanical coupling elements 21 for mechanically fastening another electrical duct box 3. Preferably said mechanical coupling elements 21 are snap joint elements that are snapped together. Thus the coupling elements 21 are advantageously male terminals. The second electrical duct box 3 can be, for instance, of the type described in the European patent publication EP-498405.

The male terminals 21 are realized so that at both ends 1a, 1, there are arranged preferably two terminal elements 21a, 21b, adjacently and spaced apart. The terminal elements 21; 21a, 21b are arranged underneath the level formed by the surface of the front plate 5 of the electrical duct box 1, i.e. on the side of the electrical duct, but so that they extend to outside the ends 1a, 1b in the lengthwise direction A - A of the electrical duct box.

At least at one end of the second electrical duct box 3, at respective points with the terminal elements 21; 21a, 21b of the first electrical duct box 1, there are arranged female terminals. Said terminals are arranged underneath the level formed by the surface of the front plate of the electrical duct box 3, i.e. on the side of the electrical duct, but they remain inside the area defined by the front plate in the lengthwise direction A - A of the electrical duct box. Now the second electrical duct box 3 can be directly connected mechanically (and also electrically) in a detachable manner at the female terminals to the male terminals 21; 21a, 21b of the first electrical duct box, at the same time as it is installed in the electrical duct, next to the first electrical duct box 1 in the lengthwise direction of the electrical duct 2 (cf. figure 1).

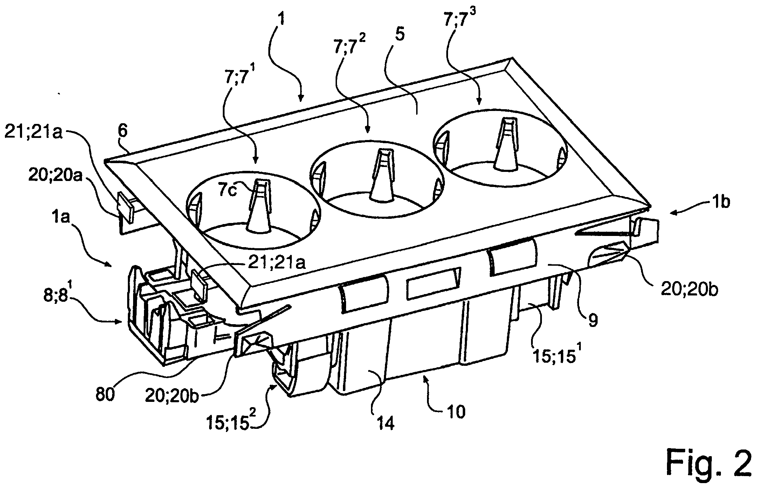

The sides on the lengthwise direction A - A of the electrical duct box 1 are provided with a second set of fastening elements 20; 20a, 20b, whereby the electrical duct box 1 is locked to the sides of the electrical duct 2 (cf. figure 2 and 4). Mechanical fastening elements 20; 20a, 20b are advantageously arranged on two sides and close to each corner of the electrical duct box which sides are to be located against to the electrical duct 2. Mechanical fastening elements 20; 20a, 20b are preferably snap joint elements by means of which mechanical snap-in joint with the electrical duct is realized. In this case the fastening elements 20 are male fastening bodies.

The invention is not restricted to the above described preferred embodiment only, but many modifications are possible within the inventive idea defined in the appended claims.

## Claims

1. An electrical duct box including a front plate (5) provided with at least one power socket (7); a wire housing (9) for internal conduit connections of the electrical duct box, said wire housing (9) being arranged, when seen at the front of the electrical duct box, on the side of the front plate (5), behind the power socket (7); and a fixed connector unit (10) provided with an electric connector (11) for connecting at least the wires (16) of the input cable (15; 15¹); cable fastening elements (12) for at least the input cable (15; 15¹); a wire space (13) for at least the wires (16) of the input cable (15; 15¹); and a shielding cover (14) for protecting at least the connections of the input cable (15; 15¹); through which connector unit (10) the electrical duct box is meant to be connected, by the input cable (15; 15¹), to a power mains or to a respective source of electricity, **characterized in that** the connector unit (10) is arranged, with respect to the front plate (5), on the opposite side of the electrical duct box (1), on the side of the wire housing (9).

2. An electrical duct box according to claim 1, **characterized in that** the electric connector (11) of the connector unit (10), advantageously a terminal block, is arranged in connection with the wire housing (9) in the lengthwise direction (A - A) of the electrical duct box.

3. An electrical duct box according to claim 1 or 2, **characterized in that** the electric connector (11) of the connector unit (10) comprises at least five, advantageously six, contacts (11a, 11b).

4. An electrical duct box according to any of the preceding claims, **characterized in that** the cable fastening elements (12) of the connector unit (10) include at least the fastening elements (12¹) of the input cable (15; 15¹), which fastening elements are arranged in connection with the wire housing (9) in the lengthwise direction (A - A) of the electrical duct box, and so that the input cable (15; 15¹) can be arranged to proceed via the cable fastening elements in the lengthwise direction (A - A) of the electrical duct box.

5. An electrical duct box according to any of the claims 1 - 3, **characterized in that** the cable fastening elements (12) of the connector unit (10) include the fastening elements (12¹, 12²) of the input and output cable (15; 15¹, 15²), which fastening elements are arranged in connection with the wire housing (9), so that they are arranged in succession and spaced apart in the lengthwise direction (A - A) of the electrical duct box, and so that the cables (15; 15¹, 15²) can be arranged to proceed via the cable fastening elements in the lengthwise direction (A - A) of the electrical duct box.

6. An electrical duct box according to claim 1, 2 or 3, **characterized in that** the electric connector (11) of the connector unit (10) and the cable fastening elements (12) are arranged, in the lengthwise direction (A-A) of the electrical duct box, on opposite sides of the electrical duct box, and that in between them, there is arranged a wire space (13).

7. An electrical duct box according to any of the preceding claims, **characterized in that** the wire housing (9) is narrow and elongate and arranged in the lengthwise direction (A - A) of the electrical duct box.

8. An electrical duct box according to claim 7, **characterized in that** the electric connector (11) of the connector unit (10), advantageously a terminal block, is arranged on the first side (9a) of the wire housing (9) in the lengthwise direction (A - A) of the electric electrical duct box.

9. An electrical duct box according to claim 7 or 8, **characterized in that** the cable fastening elements (12; 12¹, 12²) of the connector unit (10) are arranged on the other side (9b) of the wire housing (9).

10. An electrical duct box according to claim 7, 8 or 9, **characterized in that** the electric connector (11) of the connector unit (10) and the cable fastening elements (12) are arranged, in the lengthwise direction (A-A) of the electrical duct box, on opposite sides of the wire housing (9), and that in between them, against the wire housing, there is fitted a wire space (13).

11. An electrical duct box according to any of the preceding claims 6 - 10, **characterized in that** the wire space (13) of the connector unit (10) and the electric connector (11) are arranged so that the fastening holes meant for the wires (16) of the cables (15) in the contacts (11a, 11b) are a small distance outwardly from the level of bottom surface of the wire housing 9.

12. An electrical duct box according to any of the preceding claims, **characterized in that** at both ends (1a, 1b) of the electrical duct box (1) there are arranged shielded electric connectors (8; 8¹, 8²), that are mutually similar female connectors in structure.

13. An electrical duct box according to any of the preceding claims, **characterized in that** the mechanical coupling elements (21), advantageously snap joint elements, for mechanically fastening another electrical duct box (3), are provided at both ends (1a, 1b) of the electrical duct box (1), in the lengthwise direction (A - A) thereof.

14. An electrical duct box according to claim 13, **characterized in that** the mechanical coupling elements (21) are male terminals, of which there are fitted at both ends (1a, 1b) preferably two terminal elements (21a, 21b) in parallel and spaced apart.

15. An electrical duct box according to any of the preceding claims, **characterized in that** it comprises three power sockets (7).

16. An electrical duct box according to claim 15, **characterized in that** the recesses (7a, 7b) of the power socket (7) are arranged on a straight line that is positioned at an angle of 45 degrees with respect to the lengthwise direction (A - A) of the electrical duct box (1).

## Patentansprüche

1. Elektrischer Duktorkasten, der eine Stirnplatte (5), die mit mindestens einer Leistungsbuchse (7) versehen ist; ein Verdrahtungsgehäuse (9) für die internen Leitungsverbindungen des elektrischen Duktorkastens, wobei das Verdrahtungsgehäuse (9), auf der Stirn des elektrischen Duktorkastens gesehen, auf der Seite der Stirnplatte (5) hinter der Leistungsbuchse (7) angeordnet ist; und eine feststehende Verbindungseinheit (10), die mit einem elektrischen Verbindungselement (11) zum Verbinden mindestens der Drähte (16) des Eingangskabels (15; 15¹); Kabelbefestigungselementen (12) für mindestens das Eingangskabel (15; 15¹); einem Verdrahtungsraum (13) für mindestens die Drähte (16) des Eingangskabels (15; 15¹); und einer Abschirmabdeckung (14) zum Schützen mindestens der Verbindungen des Eingangskabels (15; 15¹) versehen ist; enthält, wobei vorgesehen ist, dass der elektrische Duktorkasten durch die Verbindungseinheit (10) durch das Eingangskabel (15; 15¹) mit einem Starkstromnetz oder mit einer entsprechenden Elektrizitätsquelle verbunden ist, **dadurch gekennzeichnet, dass** die Verbindungseinheit (10) in Bezug auf die Stirnplatte (5) auf der entgegengesetzten Seite des elektrischen Duktorkastens (1) auf der Seite des Verdrahtungsgehäuses (9) angeordnet ist.

2. Elektrischer Duktorkasten nach Anspruch 1, **dadurch gekennzeichnet, dass** das elektrische Verbindungselement (11) der Verbindungseinheit (10), vorteilhaft ein Anschlussblock, in Verbindung mit dem Verdrahtungsgehäuse (9) in der Längsrichtung (A-A) des elektrischen Duktorkastens angeordnet ist.

3. Elektrischer Duktorkasten nach Anspruch 1 oder 2, **dadurch gekennzeichnet, dass** das elektrische Verbindungselement (11) der Verbindungseinheit (10) mindestens fünf, vorteilhaft sechs Kontakte (11a, 11b) umfasst.

4. Elektrischer Duktorkasten nach einem der vorhergehenden Ansprüche, **dadurch gekennzeichnet, dass** die Kabelbefestigungselemente (12) der Verbindungseinheit (10) mindestens die Befestigungselemente (12¹) des Eingangskabels (15; 15¹) enthalten, wobei die Befestigungselemente in Verbindung mit dem Verdrahtungsgehäuse (9) in der Längsrichtung (A-A) des elektrischen Duktorkastens und derart angeordnet sind, dass das Eingangskabel (15; 15¹) derart angeordnet sein kann, dass es sich über die Kabelbefestigungselemente in der Längsrichtung (A-A) des elektrischen Duktorkastens fortsetzt.

5. Elektrischer Duktorkasten nach einem der Ansprüche 1-3, **dadurch gekennzeichnet, dass** die Kabelbefestigungselemente (12) der Verbindungseinheit (10) die Befestigungselemente (12¹, 12²) des Eingangskabels und des Ausgangskabels (15; 15¹, 15²) enthalten, wobei die Befestigungselemente in Verbindung mit dem Verdrahtungsgehäuse (9) derart angeordnet sind, dass sie in Folge und beabstandet in der Längsrichtung (A-A) des elektrischen Duktorkastens und derart angeordnet sind, dass die Kabel (15; 15¹, 15²) derart angeordnet sein können, dass sie sich über die Kabelbefestigungselemente in der Längsrichtung (A-A) des elektrischen Duktorkastens fortsetzen.

6. Elektrischer Duktorkasten nach Anspruch 1, 2 oder 3, **dadurch gekennzeichnet, dass** das elektrische Verbindungselement (11) der Verbindungseinheit (10) und die Kabelbefestigungselemente (12) in der Längsrichtung (A-A) des elektrischen Duktorkastens auf entgegengesetzten Seiten des elektrischen Duktorkastens angeordnet sind und dass zwischen ihnen ein Verdrahtungsraum (13) angeordnet ist.

7. Elektrischer Duktorkasten nach einem der vorhergehenden Ansprüche, **dadurch gekennzeichnet, dass** das Verdrahtungsgehäuse (9) schmal und länglich und in der Längsrichtung (A-A) des elektrischen Duktorkastens angeordnet ist.

8. Elektrischer Duktorkasten nach Anspruch 7, **dadurch gekennzeichnet, dass** das elektrische Verbindungselement (11) der Verbindungseinheit (10), vorteilhaft ein Anschlussblock, auf der ersten Seite (9a) des Verdrahtungsgehäuses (9) in der Längsrichtung (A-A) des elektrischen elektrischen Duktorkastens angeordnet ist.

9. Elektrischer Duktorkasten nach Anspruch 7 oder 8, **dadurch gekennzeichnet, dass** die Kabelbefestigungselemente (12; 12¹, 12²) der Verbindungseinheit (10) auf der anderen Seite (9b) des Verdrahtungsgehäuses (9) angeordnet sind.

10. Elektrischer Duktorkasten nach Anspruch 7, 8 oder 9, **dadurch gekennzeichnet, dass** das elektrische Verbindungselement (11) der Verbindungseinheit (10) und die Kabelbefestigungselemente (12) in der Längsrichtung (A-A) des elektrischen Duktorkastens auf entgegengesetzten Seiten des Verdrahtungsgehäuses (9) angeordnet sind und dass zwischen ihnen gegen das Verdrahtungsgehäuse ein Verdrahtungsraum (13) eingepasst ist.

11. Elektrischer Duktorkasten nach einem der vorhergehenden Ansprüche 6-10, **dadurch gekennzeichnet, dass** der Verdrahtungsraum (13) der Verbindungseinheit (10) und das elektrische Verbindungselement (11) derart angeordnet sind, dass sich die Befestigungslöcher, die für die Drähte (16) der Kabel (15) in den Kontakten (11a, 11b) vorgesehen sind, in einem kleinen Abstand nach außen von der Höhe der Bodenfläche des Verdrahtungsgehäuses 9 befinden.

12. Elektrischer Duktorkasten nach einem der vorhergehenden Ansprüche, **dadurch gekennzeichnet, dass** an beiden Enden (1a, 1b) des elektrischen Duktorkastens (1) abgeschirmte, elektrische Verbindungselemente (8; 8¹, 8²) angeordnet sind, die ihrer Struktur nach wechselseitig gleichartige Buchsenverbindungselemente sind.

13. Elektrischer Duktorkasten nach einem der vorhergehenden Ansprüche, **dadurch gekennzeichnet, dass** die mechanischen Kopplungselemente (21), vorteilhaft Schnappverbindungselemente, zum mechanischen Befestigen eines weiteren Duktorkastens (3) an beiden Enden (1a, 1b) des elektrischen Duktorkastens (1) in seiner Längsrichtung (A-A) vorgesehen sind.

14. Elektrischer Duktorkasten nach Anspruch 13, **dadurch gekennzeichnet, dass** die mechanischen Kopplungselemente (21) Steckeranschlüsse sind, wobei an beiden Enden (1a, 1b) vorzugweise zwei Anschlusselemente (21a, 21b) davon parallel und beabstandet eingepasst sind.

15. Elektrischer Duktorkasten nach einem der vorhergehenden Ansprüche, **dadurch gekennzeichnet, dass** er drei Leistungsbuchsen (7) umfasst.

16. Elektrischer Duktorkasten nach Anspruch 15, **dadurch gekennzeichnet, dass** die Vertiefungen (7a, 7b) der Leistungsbuchse (7) auf einer geraden Linie angeordnet sind, die in einem Winkel von 45 Grad in Bezug auf die Längsrichtung (A-A) des elektrischen Duktorkastens (1) angeordnet ist.

## Revendications

1. Boîte de conduit électrique comportant une plaque avant (5) dotée d'au moins une prise d'alimentation (7) ; un boîtier de fils électriques (9) pour des connexions de conduite interne de la boîte de conduit électrique, ledit boîtier de fils électriques (9) étant agencé, dans une vue à l'avant de la boîte de conduit électrique, sur le côté de la plaque avant (5), derrière la prise d'alimentation (7) ; et une unité de connecteur fixe (10) dotée d'un connecteur électrique (11) pour connecter au moins les fils électriques (16) du câble d'entrée (15 ; 15¹) ; des éléments de fixation de câble (12) pour au moins le câble d'entrée (15 ; 15¹) ; un espace de fils électriques (13) pour au moins les fils électriques (16) du câble d'entrée (15 ; 15¹) ; et un couvercle de blindage (14) pour protéger au moins les connexions du câble d'entrée (15 ; 15¹) ; unité de connecteur (10) par l'intermédiaire de laquelle la boîte de conduit électrique est censée être connectée, par le câble d'entrée (15 ; 15¹), à un secteur d'alimentation ou à une source d'électricité respective, **caractérisée en ce que** l'unité de connecteur (10) est agencée, par rapport à la plaque avant (5), sur le côté opposé de la boîte de conduit électrique (1), sur le côté du boîtier de fils électriques (9).

2. Boîte de conduit électrique selon la revendication 1, **caractérisée en ce que** le connecteur électrique (11) de l'unité de connecteur (10), avantageusement une plaque à bornes, est agencé en connexion avec le boîtier de fils électriques (9) dans le sens de la longueur (A-A) de la boîte de conduit électrique.

3. Boîte de conduit électrique selon la revendication 1 ou 2, **caractérisée en ce que** le connecteur électrique (11) de l'unité de connecteur (10) comprend au moins cinq, avantageusement six, contacts (11a, 11b).

4. Boîte de conduit électrique selon l'une quelconque des revendications précédentes, **caractérisée en ce que** les éléments de fixation de câble (12) de l'unité de connecteur (10) comportent au moins les éléments de fixation (12¹) du câble d'entrée (15 ; 15¹), lesquels éléments de fixation sont agencés en connexion avec le boîtier de fils électriques (9) dans le sens de la longueur (A-A) de la boîte de conduit électrique, et de sorte que le câble d'entrée (15 ; 15¹) puisse être agencé pour continuer via les éléments de fixation de câble dans le sens de la longueur (A-A) de la boîte de conduit électrique.

5. Boîte de conduit électrique selon l'une quelconque des revendications 1 à 3, **caractérisée en ce que** les éléments de fixation de câble (12) de l'unité de connecteur (10) comportent les éléments de fixation (12¹, 12²) du câble d'entrée et de sortie (15 ; 15¹, 15²), lesquels éléments de fixation sont agencés en connexion avec le boîtier de fils électriques (9), de sorte qu'ils soient agencés à la suite et espacés dans le sens de la longueur (A-A) de la boîte de conduit électrique, et de sorte que les câbles (15 ; 15¹, 15²) puissent être agencés pour continuer via les éléments de fixation de câble dans le sens de la longueur (A-A) de la boîte de conduit électrique.

6. Boîte de conduit électrique selon l'une quelconque des revendications 1, 2 ou 3, **caractérisée en ce que** le connecteur électrique (11) de l'unité de connecteur (10) et les éléments de fixation de câble (12) sont agencés, dans le sens de la longueur (A-A) de la boîte de conduit électrique, sur des côtés opposés de la boîte de conduit électrique, et **en ce qu'**un espace de fils électriques (13) est agencé entre eux.

7. Boîte de conduit électrique selon l'une quelconque des revendications précédentes, **caractérisée en ce que** le boîtier de fils électriques (9) est étroit et allongé et agencé dans le sens de la longueur (A-A) de la boîte de conduit électrique.

8. Boîte de conduit électrique selon la revendication 7, **caractérisée en ce que** le connecteur électrique (11) de l'unité de connecteur (10), avantageusement une plaque à bornes, est agencé sur le premier côté (9a) du boîtier de fils électriques (9) dans le sens de la longueur (A-A) de la boîte électrique de conduit électrique.

9. Boîte de conduit électrique selon la revendication 7 ou 8, **caractérisée en ce que** les éléments de fixation de câble (12 ; 12¹, 12²) de l'unité de connecteur (10) sont agencés sur l'autre côté (9b) du boîtier de fils électriques (9).

10. Boîte de conduit électrique selon la revendication 7, 8 ou 9, **caractérisée en ce que** le connecteur électrique (11) de l'unité de connecteur (10) et les éléments de fixation de câble (12) sont agencés, dans le sens de la longueur (A-A) de la boîte de conduit électrique, sur des côtés opposés du boîtier de fils électriques (9), et **en ce qu'**un espace de fils électriques (13) est installé entre eux, contre le boîtier de fils électriques.

11. Boîte de conduit électrique selon l'une quelconque des revendications 6 à 10, **caractérisée en ce que** l'espace de fils électriques (13) de l'unité de connecteur (10) et le connecteur électrique (11) sont agencés de sorte que les trous de fixation destinés aux fils électriques (16) des câbles (15) dans les contacts (11a, 11b) soient à une courte distance vers l'extérieur du niveau de la surface inférieure du boîtier de fils électriques 9.

12. Boîte de conduit électrique selon l'une quelconque des revendications précédentes, **caractérisée en ce qu'**aux deux extrémités (1a, 1b) de la boîte de conduit électrique (1) sont agencés des connecteurs électriques blindés (8 ; 8¹, 8²), qui sont des connecteurs femelles de structure mutuellement similaire.

13. Boîte de conduit électrique selon l'une quelconque des revendications précédentes, **caractérisée en ce que** les éléments de couplage mécanique (21), avantageusement des éléments d'emboîtement (Snap-Joint), pour fixer mécaniquement une autre boîte de conduit électrique (3), sont prévus aux deux extrémités (1a, 1b) de la boîte de conduit électrique (1), dans son sens de la longueur (A-A).

14. Boîte de conduit électrique selon la revendication 13, **caractérisée en ce que** les éléments de couplage mécanique (21) sont des bornes mâles, aux deux extrémités (1a, 1b) desquelles sont installés de préférence deux éléments de borne (21a, 21b) en parallèle et espacés.

15. Boîte de conduit électrique selon l'une quelconque des revendications précédentes, **caractérisée en ce qu'**elle comprend trois prises d'alimentation (7).

16. Boîte de conduit électrique selon la revendication 15, **caractérisée en ce que** les évidements (7a, 7b) de la prise d'alimentation (7) sont agencés sur une ligne droite qui est positionnée à un angle de 45 degrés par rapport au sens de la longueur (A-A) de la boîte de conduit électrique (1).
